# EUROPÄISCHE PATENTSCHRIFT

(11) **EP 0 575 395 B1**
(45) Veröffentlichungstag und Bekanntmachung des Hinweises auf die Patenterteilung: **02.08.1995**
(21) Anmeldenummer: 92906017.6
(22) Anmeldetag: 09.03.1992
(51) Int. Cl.: F17C 1/10, F17C 13/08, B23K 1/18

(54) **DOPPELWANDIGER DRUCKBEHÄLTER UND VERFAHREN ZU SEINER HERSTELLUNG**
DOUBLE-WALLED PRESSURE VESSEL AND PROCESS FOR MANUFACTURING IT
RESERVOIR SOUS PRESSION A DOUBLE PAROI ET PROCEDE POUR SA FABRICATION

(30) Priorität: 12.03.1991 DE 9102936 U; 03.12.1991 DE 4139739
(43) Veröffentlichungstag der Anmeldung: 29.12.1993
(73) Patentinhaber: Cyron, Theodor, D-51427 Bergisch Gladbach (DE)
(72) Erfinder: Cyron, Theodor, D-51427 Bergisch Gladbach (DE)
(74) Vertreter: Kahlhöfer, Hermann, Dipl.-Phys.
(86) Internationale Anmeldenummer: EP9200517
(87) Internationale Veröffentlichungsnummer: WO9216787

(56) Entgegenhaltungen:
- FR-A- 649 139
- NL-C- 51 406
- US-A- 1 748 138
- PATENT ABSTRACTS OF JAPAN vol. 6, no. 143 (C-117)(1021) 3. August 1982 & JP-A- 57 065 319

## Beschreibung

### Doppelwandiger Druckbehälter und Verfahren zu seiner Herstellung

Die vorliegende Erfindung betrifft einen doppelwandigen Druckbehälter mit einem dünnwandigen Innenbehälter aus korrosionsbeständigem, dichtem Material, insbesondere aus Edelstahl, und mit einem druckfesten Außenbehälter, insbesondere aus einem hochvergüteten Stahl, siehe z.B. US-A-1748138.

Solche Druckbehälter werden insbesondere als Druckgasflaschen gebraucht für Gase hoher Reinheit oder besonderer Aggressivität, die z. B. in der Halbleitertechnik oder in der Prüftechnik benötigt werden. Einwandige Edelstahlbehälter sind in der Herstellung und vom Material her sehr teuer und auch schwer, weil sie wegen der geringeren Werkstoff-Festigkeit der üblichen Edelstähle dickwandiger ausgeführt werden müssen als gleichfeste Flaschen aus Vergütungsstählen.

In der DE-PS 38 15 347 werden mehrere verschiedene Druckgasflaschen aus einem dünnwandigen Innenbehälter aus Edelstahl und einer diesen umgebenden mehrteiligen druckfesten Hülse sowie mehrere Verfahren zur Herstellung solcher Druckgasflaschen beschrieben. Das wesentliche gemeinsame Merkmal dieser Druckgasflaschen besteht darin, daß die verschiedenen Teile der äußeren Hülse nach dem Einschieben des Innenbehälters miteinander verschraubt sind. Die Herstellung eines dafür geeigneten Gewindes ist sehr aufwendig. Im Bereich des Gewindes ist der Außendurchmesser gegenüber der eigentlichen Hülse vergrößert, was zu einem höheren Gewicht führt. Der Innenbehälter wird nach der Montage durch plastisches Aufweiten an der Innenwand der Hülse zur Anlage gebracht. Ein Außenbehälter aus zwei miteinander verschweißten Teilen wird als bekannt vorausgesetzt. Die dargestellte Schweißkonstruktion zeigt eine umlaufende Schweißnaht am Mantel, deren Schweißwurzel in unmittelbarer Nähe des dünnwandigen Innenbehälters angeordnet ist. Diese Schweißnaht kann den Innenbehälter schädigen. Dieser kann später nicht einwandfrei geprüft werden. Für einen Außenbehälter aus vergütetem Stahl ist eine solche Schweißnaht im hochbelasteten Bereich nicht zweckmäßig, weil das Gefüge durch die hohe Temperatur beim Schweißen verändert wird. Die Schweißzone kann auch nicht nachträglich durch Wärmebehandlung vergütet werden, weil dabei der dünnwandige Innenbehälter leiden würde.

Aufgabe der vorliegenden Erfindung. ist die Schaffung eines doppelwandigen Druckbehälters mit gegenüber dem Stande der Technik verringertem Gewicht und/oder verringerten Herstellkosten. Auch ein geeignetes Herstellungsverfahren soll angegeben werden.

Zur Lösung dieser Aufgabe dient ein doppelwandiger Druckbehälter mit einem dünnwandigen Innenbehälter aus einem korrosionsbeständigen, dichten Material, insbesondere aus Edelstahl, und mit einem druckfesten Außenbehälter, der einen Mantel, ein Übergangsteil, ein Halsteil und ein Bodenteil hat, wobei das Bodenteil und/oder das Übergangsteil mit Halsteil innen in einem zylindrischen oder schwach konischen Endbereich des Mantels angeordnet ist und wobei das Bodenteil bzw. das Übergangsteil einen äußeren Kragen aufweist, welcher zumindest abschnittsweise etwa parallel zum Endbereich des Mantels verläuft und mit diesem durch eine fügetechnische Verbindung verbunden ist, und wobei das Bodenteil (2;22;32;42;52) so geformt ist, daß an der fügetechnischen Verbindungzone keine innendruckbedingten Tangentialspannungen auftreten, wobei das Bodenteil zumindest in der nähe der Verbindungszone nach außen gewölbt ist.

Dieser Druckbehälter hat einen druckfesten Außenbehälter, der einen Innenbehälter eng anliegend umgibt, dessen dünnwandiger Hals aus dem Außenbehälter herausgeführt und z. B. umgebördelt ist. Der dünnwandige Innenbehälter wird zunächst in den an einem Ende offenen Außenbehälter eingeschoben und dann erst der Außenbehälter mit einem eingesetzten Bodenteil und/oder Halsteil verschlossen. Der Innenbehälter kann, wenn er aus Metall, insbesondere aus Edelstahl besteht, vorher normalerweise aus mehreren Teilen miteinander verschweißt und mit üblichen Methoden gereinigt und geprüft werden. Dabei ist es zweckmäßig, dem Innenbehälter eine Außenform zu geben, die der späteren Innenform des Außenbehälters entspricht. Der Innenbehälter kann nach dem fügetechnischen Verbinden des in den Außenmantel eingesetzten Bodenteils und/oder Halsteils hydraulisch oder pneumatisch aufgeweitet werden, damit er sich mit geringer plastischer Verformung spaltfrei an den Außenbehälter anlegt. Nach diesem Verfahren werden eventuelle Spalte, die sich aufgrund von Fertigungsungenauigkeiten ergeben können, vermieden. Zweckmäßigerweise erhält der Innenbehälter absichtlich einige leichte Längswellen im zylindrischen Teil. Damit wird seine Einführung in den Außenbehälter erleichtert. Diese Wellen werden durch das anschließende Aufweiten am Außenbehälter zum Anliegen gebracht. Zweckmäßigerweise wird der Spalt zwischen Innenbehälter und Außenbehälter vor dem Aufweiten evakuiert, damit hier keine wesentlichen Gas- oder Luftmengen zurückbleiben können. Dazu, wie auch zur Prüfung der Dichtigkeit, ist eine Öffnung im Außenbehälter vorgesehen.

Der Innenbehälter kann auch aus Kunststoff bestehen.

Das fügetechnische Verbinden, insbesondere Schweißen oder Hartlöten, des drucktragenden Außenbehälters mit dem eingesetzten Bodenteil und/oder Halsteil kann aufgrund der besonderen Formgebung des Bodenteils mit einem äußeren Kragen in einer lokal niedrigbelasteten Zone erfolgen. Der erfindungsgemäße Außenbehälter kann daher aus handelsüblichen Vergütungsstählen bestehen und im vergüteten Zustand ohne nachträgliche thermische Vergütung verbunden werden. Dies wird ermöglicht, weil durch den druckdichten Innenbehälter an der fügetechnischen Verbindungszone im Außenmantel keine innendruckbedingten Tangentialspannungen auftreten. Die durch die thermische Belastung beim Verbinden festigkeitsverminderte Zone des angelassenen Vergütungsstahles braucht lediglich die aus dem Innendruck resultierende Axialkraft aufzunehmen, wodurch sich die in der Verbindungszone auftretende Spannung und damit die erforderliche Festigkeit des Vergütungsstahles um ca. die Hälfte vermindert. Auch wird die fügetechnische Verbindungsstelle bei geeigneter Anordnung nicht auf Zug, sondern nur mit einer Scherbelastung beansprucht, die sich aufgrund der besonderen Formgebung des Bodenteils und/oder Halsteils auf eine gegenüber der Mantelquerschnittsfläche vielfach (z. B. 2- bis 4fach) größeren Verbindungsfläche verteilt. Um die thermische Belastung des Stahles in der Verbindungszone möglichst gering zu halten, ist ein strahltechnisches Schweißverfahren wie z. B. das Elektronenstrahlschweißen besonders günstig oder aber ein bei niedrigerer Temperatur erfolgendes Hartlöten. Außerdem sollte die Verbindungsstelle von der Druckbehälterinnenfläche des Boden- und/oder Halsteils weiter entfernt sein als die Dicke des Mantels, vorzugsweise mindestens doppelt so weit.

Ein wesentlicher Vorteil des erfindungsgemäßen doppelwandigen Druckbehälters ist bei Innenbehältern aus Edelstahl eine glatte, saubere, partikel- und anlauffarbenfreie Innenoberfläche des Innenbehälters, weil dieser nach dem Einbringen in den Außenbehälter nicht mehr durch hohe Temperaturen verändert wird. Bei Innenbehältern aus Kunststoff wird ebenfalls eine Schädigung durch hohe Temperaturen vermieden.

In weiterer Ausgestaltung der Erfindung wird das Bodenteil und/oder Halsteil aus einem nach außen gewölbten Tragboden und einem angeformten zylindrischen bzw. schwach konischen äußeren Kragen gebildet, dessen Außenform der Innenform des Mantels entspricht. Dieses Bodenteil und/ oder Halsteil kann einstückig in einer Form gepreßt sein. Mit einer leicht konischen Außenform läßt es sich ohne besondere Probleme in dem entsprechend geformten Mantel montieren. Mit zylindrischer Außenform läßt es sich mit geringer Abkühlung in den Mantel einschrumpfen.

In weiterer Ausgestaltung der Erfindung wird vorgesehen, daß der Außenbehälter mindestens eine Öffnung zum Zwischenraum zwischen Außenbehälter und Innenbehälter enthält. Mit dieser Öffnung kann der Zwischenraum nach der Montage und vor dem Schweißen evakuiert werden. Weiterhin kann mit dieser Öffnung die Dichtigkeit des Innenbehälters geprüft werden, beispielsweise mit einem Heliumlecktest. Außerdem ist es zweckmäßig, den Innenbehälter vor der ersten Füllung zu evakuieren, damit darin keine wesentlichen Luftmengen zurückbleiben, die das später einzufüllende Gas verunreinigen. Für diesen Fall, wenn nämlich der Innenbehälter unter Vakuum steht, sollte auch der.Zwischenraum unter Vakuum stehen, damit dieser nicht durch den Außendruck zusammengepreßt wird.

In weiterer Ausgestaltung der Erfindung kann diese Öffnung mit einem Stopfen verschlossen sein, der bei Überdruck im Zwischenraum nach außen gedrückt wird. Mit diesem Stopfen läßt sich nachweisen, daß der Innenbehälter noch dicht ist. Ein solcher Stopfen könnte beispielsweise aus Gummi oder anderen Elastomeren oder einem aushärtenden Kunststoff bestehen.

Das Bodenteil und/oder Halsteil kann auch z. B. mit einem annähernd senkrecht zur Schweißstrahlrichtung angeordneten Absatz an einem entsprechend geformten Absatz des Mantels anliegen. Mit diesen Absätzen wird sichergestellt, daß der Schweißstrahl nicht bis zum Innenbehälter vordringt und diesen eventuell schädigt. Außerdem bildet ein solcher Absatz eine klar definierte Anlagefläche für die Montage des Bodenteils und/oder Halsteils im Mantel.

Als besonders günstig hat sich zur Herstellung der fügetechnischen Verbindung zwischen Mantel und Bodenteil ein Hartlötverfahren erwiesen, da die Temperatur unterhalb der für fügetechnische Veränderungen kritischen Temperatur bei hochvergüteten Stählen, z. B. 34CrMo4, bleiben kann. Insbesondere kann ein Lot verwendet werden, welches bei Temperaturen im Bereich von etwa 730° C verwendbar ist. Zur Befestigung des Tragbodens im Mantel eines Druckbehälters werden beide außen bzw. innen zunächst maßhaltig bearbeitet. Dann wird der Tragboden stirnseitig in den Mantel eingesetzt, so daß dessen äußerer Kragen und der Mantel unter Belassung eines Lötspaltes etwa konzentrisch zueinander liegen. Der Lötspalt kann als Depot des Lotmaterials in draht-, folien- oder pulverförmiger Gestaltung dienen.
Anschließend werden Kragen und Mantelende induktiv auf Löttemperatur erwärmt oder bis zur oberen Linie der Verbindungsfläche in flüssiges Lot getaucht. Nach nur kurzzeitiger Wärmeeinwirkung auf die drucktragenden Teile des Mantels und des Tragbodens wird der Lötvorgang beendet, so daß in den drucktragenden Teilen keine Gefügeänderungen auftreten. Als Lotvorrichtung geeignet ist beispielsweise ein mit Induktionsspulen beheizter ringförmiger Lotbehälter, in den die Druckflasche abgesenkt werden kann.

Die Figuren 1 bis 6 zeigen Ausführungsbeispiele der Erfindung, und zwar jeweils einen senkrechten Längsschnitt durch einen erfindungsgemäßen Druckbehälter bzw. einen Teil desselben.

Es zeigen:
- Fig. 1: rechts einen Druckbehälter vor, links nach Fertigstellung,
- Fig. 2: eine alternative Ausführungsform,
- Fig. 3: eine weitere Alternative,
- Fig. 4: eine andere Alternative,
- Fig. 5: eine Ausführungsform mit seitlicher Schweißnaht und
- Fig. 6: eine Form und Vorrichtung für hartgelötete Verbindungen.

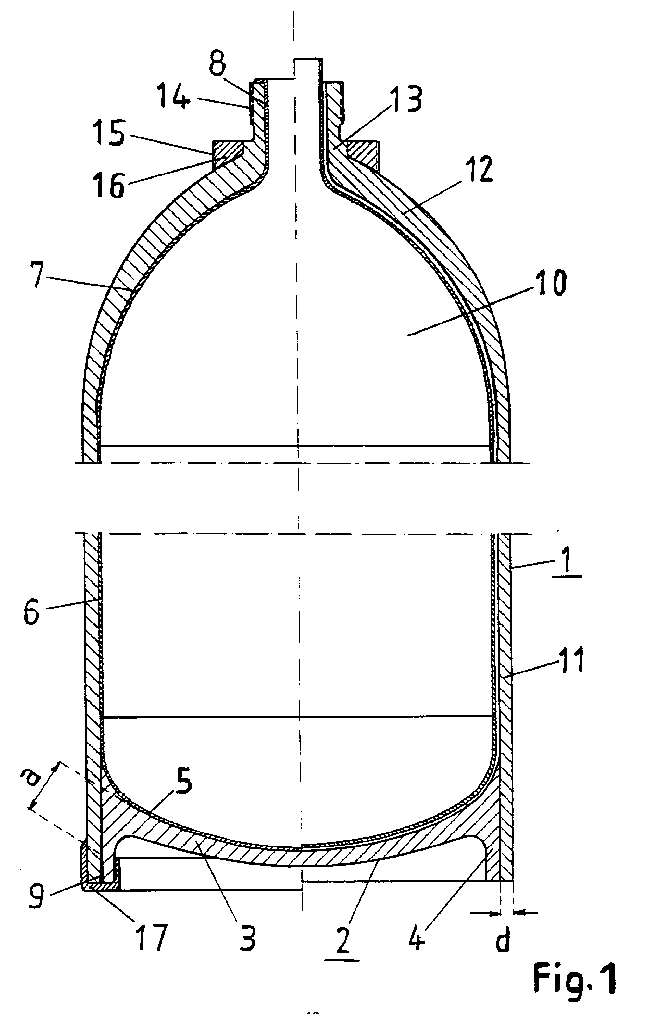

Figur 1 zeigt in der rechten Hälfte den Druckbehälter vor der Fertigstellung und in der linken Hälfte nach der Fertigstellung. Dabei besteht der Außenbehälter 1 aus einem einseitig offenen, beispielsweise im Drückverfahren aus einem Rohr hergestellten Mantel 11 mit einem Übergangsteil 12 zu einem angeformten Hals 13 und einem eingesetzten Bodenteil 2. Der Innenbehälter besteht in diesem Fall aus einem kalottenförmigen Innenboden 5, einem zylindrischen Innenmantel 6, einem inneren Übergangsstück 7 mit einem inneren Hals 8, wobei die Teile 5 bis 7 durch Schweißnähte miteinander verbunden sind, die vor dem Einbau einwandfrei gereinigt und geprüft werden können. Nach dem Einschieben des Innenbehälters, bestehend aus den Teilen 5 bis 8, wird in den Mantel 11 ein entsprechend geformtes Bodenteil 2 eingesetzt. Es ist sinnvoll, dem Innenbehälter, der sich ja wesentlich leichter verformen läßt, von vornherein eine Außenform zu geben, die der Innenform des Außenbehälters 1 entspricht. Nach dem Einsetzen des Bodenteils 2 oder auch.eines nicht dargestellten Halsteils entsprechender Form wird der Außenbehälter mit einer fügetechnischen Verbindung 9 mit dem Bodenteil 2 oder Halsteil verbunden, vorzugsweise mittels Elektronenstrahlverfahren oder durch Hartlöten.wegen der geringeren Wärmebelastung. Dabei weist das Bodenteil 2 einen eigentlichen Tragboden 3 und einen äußeren Kragen 4 auf, wobei die fügetechnische Verbindung 9 immer am äußeren Kragen 4 erfolgt, und zwar in einem Abstand a vom Innenboden 5, der größer als die Wanddicke d des Außenbehälters 1 ist.

Die Teile 5 bis 8 sind wegen der deutlicheren Darstellung dicker gezeichnet als notwendig. Eine Wandstärke von 0,5 - 0,8 mm ist ausreichend und läßt sich einwandfrei schweißtechnisch herstellen. Der Außenbehälter 1 hat in diesem Fall etwa 200 mm Außendurchmesser und ein Innenvolumen 10 von 50 bis 60 l. Er ist geeignet für einen Betriebsdruck von 200 bar und hat eine Wanddicke d von etwa 4 bis 8 mm.

In der linken Hälfte zeigt Figur 1 den Endzustand des Druckbehälters, wobei der Hals 13 mit einem ersten Außengewinde 14 versehen ist für übliche Anschlußarmaturen. Ein zweites Außengewinde 15 zum Anschluß der bei Druckgasflaschen üblichen Schutzhauben wird in bekannter Weise durch Aufschrumpfen eines entsprechenden Gewinderinges 16 vorgesehen. Die fügetechnische Verbindung 9 als Verbindung von Mantel 11 und Bodenteil 2 kann mit einem Schutzring 17 von U-förmigem Längsschnitt gegen Beschädigungen geschützt werden. Dieser Schutzring 17 kann aufgeschrumpft oder auch durch einige Schweißpunkte am Mantel befestigt werden. Der Innenbehälter aus den Teilen 5 bis 8 kann nach der Montage und nach dem Verbinden durch plastisches Aufweiten an der Innenwand des Außenbehälters 1 aus den Teilen 11, 12, 13, 3 zur Anlage gebracht werden.

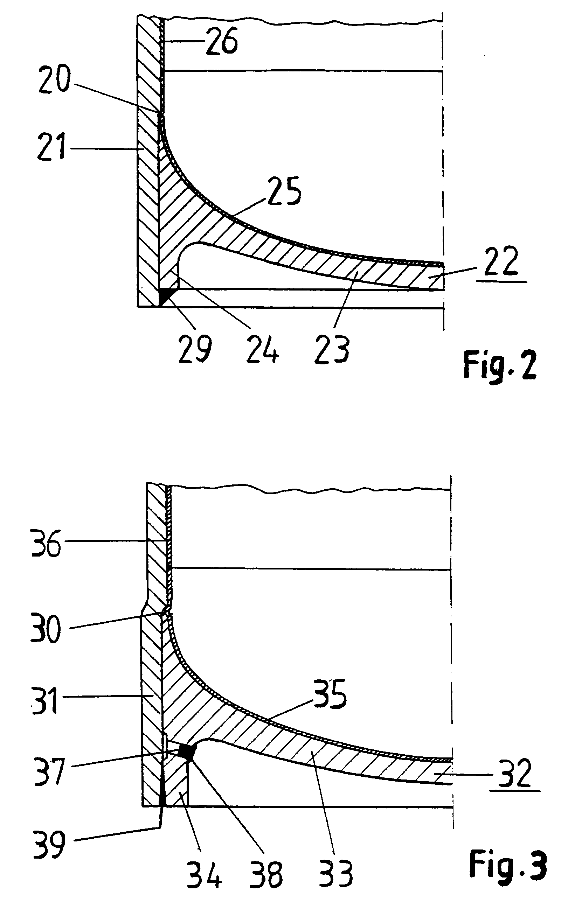

Figur 2 zeigt eine Alternative zu Figur 1 mit einem Bodenteil 22, das an einem Absatz 20 im Mantel 21 anliegt und mit einer konventionellen Schweißnaht 29 befestigt ist. Der Mantel 21 ist im Bereich des Bodenteils 22 ausgedreht, so daß hier jede gewünschte Passung erreicht werden kann.

Figur 3 zeigt eine weitere Alternative mit einem Bodenteil 32, das in einem aufgeweiteten Bereich des Mantels 31 anliegt. Die zwischen 32 und 31 entstehende umlaufende Nut 30 wird beim plastischen Aufweiten des Innenbehälters 35,36 ausgefüllt. Das Bodenteil 32 enthält eine Öffnung 37, mit der der Spalt zwischen Mantel 31 und Innenbehälter 35,36 vor dem Fügen evakuiert und nach dem Fügen auf Undichtigkeiten geprüft werden kann. Diese Öffnung 37 kann mit einem Stopfen 38 verschlossen sein, einerseits um Verunreinigungen des Zwischenraumes zu vermeiden und andererseits um die Dichtigkeit des Innenbehälters nachzuweisen.

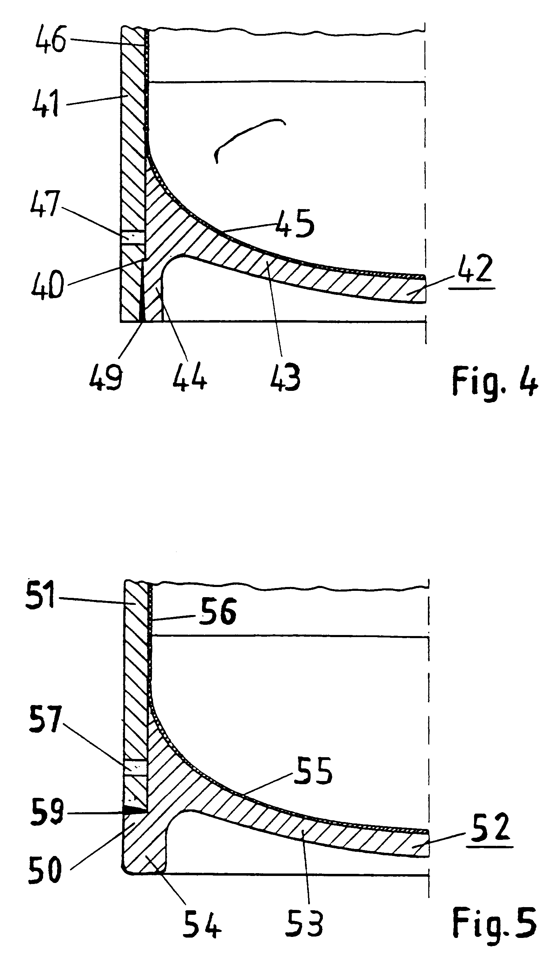

Figur 4 zeigt eine weitere Alternative, bei der der äußere Kragen 44 des Bodenteils 42 mit einem Absatz 40 am Mantel 41 anliegt und nach einem Strahlverfahren mit dem Mantel 41 verschweißt ist. Hier ist deutlich erkennbar, daß ein achsparalleler Schweißstrahl auch unter ungünstigen Bedingungen durch den zwangsläufig vorhandenen Spalt zwischen Bodenteil 42 und Mantel 41 nicht bis zum Innenbehälter 45,46 vordringen kann. Auch hier ist eine Öffnung 47 dargestellt.

Figur 5 zeigt eine weitere Alternative, bei der der äußere Kragen 54 des Bodenteils 52 außen eine Stufe 50 hat, mit der der Mantel 51 mittels einer umlaufenden Radialschweißnaht 59 verbunden ist. Diese Lösung hat gegenüber den vorhergehenden Lösungen folgende Unterschiede: Die Schweißnaht 59 ist fertigungstechnisch leichter zugänglich, jedoch ist der tragende Querschnitt der Schweißnaht auf die Wandstärke des drucktragenden Mantels 51 beschränkt. Auch hier ist eine Öffnung 57 vorgesehen, die in diesem Fall im Mantel 51 angeordnet und daher bei stehender Flasche einfacher zugänglich ist. Der Innenbehälter 55,56 bleibt unverändert.

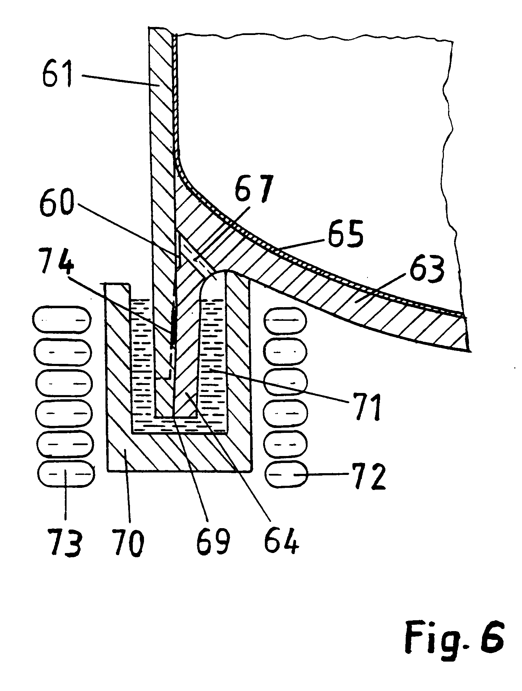

Figur 6 zeigt eine Form von Mantel 61 und Tragboden 63 bzw. äußerem Kragen 64, welche besonders für eine hartgelötete Verbindung 69 geeignet sind. Die Verbindungsstelle 69 liegt auch hier weit entfernt vom Innenboden 65. Auch hier sind im übrigen eine umlaufende Nut 60 und eine Entlastungsöffnung 67 vorgesehen. Als Lötvorrichtung ist schematisch ein ringförmiger Lotbehälter 70 mit Lot 71 dargestellt, welcher durch eine innere 72 und eine äußere 73 Induktionsspule beheizbar ist.

Der durch die schwachkonische Formgestaltung von Mantelende 61 und Tragbodenkragen 64 entstehende konzentrische Lotspalt 74 mit maßlich gleicher Spaltbreite ist sowohl als Depot für Lot in fester Form, z. B. als Folie, Draht oder Pulver, geeignet wie auch als kapillaraktiver Spalt für aufsteigendes Lot aus dem Lotbad.

Wenn in den vorhergehenden Absätzen von einer Entlastungsöffnung 37,47,57 oder 67 die Rede war, so soll damit nicht ausgeschlossen werden, daß auch mehrere Öffnungen über den Umfang verteilt angeordnet werden können. Weiterhin kann es zweckmäßig sein, in den entsprechenden Bodenteilen nicht näher dargestellte Nuten entsprechend der Nut 60 in Figur 6 zur Entgasung des Zwischenraumes anzuordnen, die zu den genannten Öffnungen führen.

Diese erfindungsgemäßen Druckbehälter können aus hochfesten Werkstoffen, daher mit geringen Wandstärken und dementsprechend geringem Gewicht und mit geringen Herstellkosten gebaut werden.

Vorteile zeigen sich nicht nur bei den oben genannten Vergütungsstählen, sondern auch bei anderen Werkstoffen für den Außenbehälter, dessen hochbelastete Zonen nicht durch die beim Schweißen oder Hartlöten auftretende Erwärmung in der fügetechnischen Verbindungszone in unerwünschter Weise verändert werden sollen.

Der Spalt zwischen Bodenteil und Mantel ist in den Figuren 1 bis 5 zylindrisch dargestellt. Er kann auch am Mantelende eine ganz schwach konische Form haben, beispielsweise mit einem Konuswinkel von 2° bis 5°, vorzugsweise 3°. Damit wird die Montage des Bodenteils im Mantel erleichtert.

### Bezugszeichenliste:

- 1: Außenbehälter
- 2; 22; 32; 42; 52: Bodenteil
- 3; 23; 33; 43; 53; 63: Tragboden
- 4; 24; 34; 44; 54; 64: äußerer Kragen
- 5; 25; 35; 45; 55; 65: kalottenförmiger Innenboden
- 6; 26; 36; 46; 56: zylindrischer Innenmantel
- 7: inneres Übergangsstück
- 8: innerer Hals
- 9; 29; 39; 49; 59; 69: fügetechnische Verbindung
- 10: Innenvolumen
- 11; 21; 31; 41; 51; 61: Mantel
- 12: Übergangsteil
- 13: Halsteil
- 14: erstes Außengewinde
- 15: zweites Außengewinde
- 16: Gewindering
- 17: Schutzring
- 20; 40: Absatz
- 30; 60: umlaufende Nut
- 37; 47; 57; 67: Entlastungsöffnung
- 38: Stopfen
- 50: Stufe
- 70: Lotbehälter
- 71: Lot
- 72: innere Induktionsspule
- 73: äußere Induktionsspule
- 74: Lotdepot

## Patentansprüche

1. Doppelwandiger Druckbehälter mit einem dünnwandigen Innennbehälter (5, 6, 7, 8; 25, 26; 35, 36; 45, 46; 55, 56) aus einem korrosionsbeständigen, dichten Material, insbesondere Edelstahl, und mit einem druckfesten Außenbehälter (1), der einen Mantel (11; 21; 31; 41; 51; 61), ein Übergangsteil (12), ein Halsteil (13) und ein Bodenteil (2; 22; 32; 42; 52) hat, wobei das Bodenteil (2; 22; 32; 42; 52) und/oder das Übergangsteil (12) mit Halsteil (13) innen in einem zylindrischen oder schwach konischen Endbereich des Mantels (11; 21; 31; 41; 51; 61) angeordnet ist und wobei das Bodenteil (2; 22; 32; 42; 52) bzw. das Übergangsteil (12) einen äußeren Kragen (4; 24; 34; 44; 54; 64) aufweist, welcher zumindest abschnittsweise etwa parallel zum Endbereich des Mantels (11; 21; 31; 41; 51; 61) verläuft und mit diesem durch eine fügetechnische Verbindung (9; 29; 39; 49; 59; 69) verbunden ist, dadurch gekennzeichnet, daß das Bodenteil (2; 22; 32; 42; 52) so geformt ist, daß an der fügetechnischen Verbindungszone keine innendruckbedingten Tangentialspannungen auftreten, und wobei das Bodenteil zumindest in der nähe der Verbindungszone nach außen gewölbt ist.

2. Druckbehälter nach Anspruch 1, wobei die fügetechnische Verbindung eine geschweißte (9; 29; 39; 49; 59) oder hartgelötete (69) Verbindung ist und die Verbindungsstelle vom Innenboden (5; 25; 35; 45; 55; 65) einen Abstand (a) hat, der erheblich größer als die Wanddicke (d) des Mantels (1) ist, vorzugsweise größer als die zweifache Wanddicke (d).

3. Druckbehälter nach Anspruch 1 oder 2, wobei der Außenbehälter (1) aus hochvergütetem Stahl, z. B. 34CrMo4, besteht und die fügetechnische Verbindung eine hartgelötete Verbindung (69) ist, hergestellt mit einem Lot (71), welches bei einer Löttemperatur unterhalb der für Gefügeveränderungen im hochvergüteten Stahl kritischen Temperatur verwendbar ist, z. B. bei 730° C.

4. Druckbehälter nach Anspruch 1 oder 2, wobei die fügetechnische Verbindung (9; 29; 39; 49; 59) nach einem Strahlverfahren hergestellt ist, insbesondere durch Elektronenstrahlschweißen.

5. Druckbehälter nach einem der vorhergehenden Ansprüche, wobei das Bodenteil (2; 22; 32; 42; 52) aus einem nach außen gewölbten Tragboden (3; 23; 33; 43; 53; 63) und einem zylindrischen oder schwach konischen äußeren Kragen (4; 24; 34; 44; 54; 64) besteht, dessen Außenform der Innenform des Mantels (11; 21; 31; 41; 51; 61) entspricht.

6. Druckbehälter nach einem der vorhergehenden Ansprüche, wobei zumindest in Teilbereichen ein Zwischenraum zwischen Außenbehälter (1) und Innenbehälter (5, 6, 7, 8; 25, 26; 35, 36; 45, 46; 55, 56) vorhanden ist und der Außenbehälter (1) mindestens eine Entlastungsöffnung (37; 47; 57; 67) aufweist, die mit dem Zwischenraum in Verbindung (30; 60) steht.

7. Druckbehälter nach Anspruch 6, wobei jede Entlastungsöffnung (37; 47; 57; 47) mit einem Stopfen (38) verschlossen ist, der bei Überdruck im Zwischenraum nach außen gedrückt werden kann.

8. Druckbehälter nach einem der vorhergehenden Ansprüche, wobei der Mantel (21; 31; 41; 51; 61) und /oder der Äußere Kragen (24; 34; 44; 54; 64) mit Stufen (50) und/oder Nuten (30; 60) zur Vereinfachung des Zusammenbaus und/oder zur Druckentlastung beim Undichtwerden des Innenbehälters (5, 6, 7, 8; 25, 26; 35, 36; 45, 46; 55, 56) versehen sind.

9. Verfahren zur Befestigung des Tragbodens (63) eines Druckbehälters entsprechend dem Anspruch 3 mit folgenden Schritten:
a. Mantel (61) und äußerer Kragen (64) des Tragbodens (63) werden innen bzw. außen maßhaltig bearbeitet;
b. der Tragboden (63) wird stirnseitig in den Mantel (61) eingesetzt, so daß der äußere Kragen (64) und der Mantel (61) unter Belassung eines Lötspaltes (69), der vorzugsweise ein Lotdepot (74) enthalten kann, etwa konzentrisch zueinander liegen;
c. Kragen (64) und Mantel (61) werden miteinander verlötet, und zwar nur so weit, daß das Lot den Innenboden (65) nicht erreicht;
d. nach nur kurzzeitiger Wärmeeinwirkung auf den drucktragenden Teil des Mantels (61) und den Tragboden (63) wird der Lötvorgang beendet, so daß in den drucktragenden Teilen keine Gefügeveränderungen auftreten.

10. Verfahren nach Anspruch 9, wobei das Lot (71) in einem ringförmigen Behälter (70) enthalten ist, welcher durch Induktionsspulen (72, 73) beheizt wird.

## Claims

1. A double-wall pressure vessel comprising a thin-wall inner vessel (5, 6, 7, 8; 25, 26; 35, 36; 45, 46; 55, 56) of a corrosion-resistant dense material, in particular high-grade steel, and a pressure-resistant outer vessel (1) which has a casing portion (11; 21; 31; 41; 51; 61), a transition portion (12), a neck portion (13) and a bottom portion (2; 22; 32; 42; 52), wherein the bottom portion (2; 22; 32; 42; 52) and/or the transition portion (12) with neck portion (13) is arranged internally in a cylindrical or slightly conical end region of the casing portion (11; 21; 31; 41; 51; 61) and wherein the bottom portion (2; 22; 32; 42; 52) or the transition portion (12) has an outer collar (4; 24; 34; 44; 54; 64) which at least in a portion-wise manner extends approximately parallel to the end region of the casing portion (11; 21; 31; 41; 51; 61) and is connected thereto by a connection (9; 29; 39; 49; 59; 69) involving a joining procedure characterised in that the bottom portion (2; 22; 32; 42; 52) is so formed that no tangential stresses caused by internal pressure occur at the connection zone involving the joining procedure, and wherein the bottom portion is curved outwardly at least in the vicinity of the connection zone.

2. A pressure vessel according to claim 1 wherein the connection involving the joining procedure is a welded (9; 29; 39; 49; 59) or hard-soldered (69) connection and the connecting location is at a spacing (a) from the inner bottom (5; 25; 35; 45; 55; 65), which is considerably greater than the wall thickness (d) of the casing portion (1) and is preferably greater than double the wall thickness (d).

3. A pressure vessel according to claim 1 or claim 2 wherein the outer vessel (1) comprises highly heat-treated steel, for example 34CrMo4, and the connection involving the joining procedure is a hard-soldered connection (69), produced with a solder (71) which can be used at a soldering temperature below the temperature which is critical for changes in structure in the highly heat-treated steel, for example at 730°C.

4. A pressure vessel according to claim 1 or claim 2 wherein the connection (9; 29; 39; 49; 59) involving the joining procedure is produced using a beam process, in particular by electron beam welding.

5. A pressure vessel according to one of the preceding claims wherein the bottom portion (2; 22; 32; 42; 52) comprises an outwardly curved support bottom (3; 23; 33; 43; 53; 63) and a cylindrical or slightly conical outer collar (4; 24; 34; 44; 54; 64) whose outside shape corresponds to the inside shape of the casing portion (11; 21; 31; 41; 51; 61).

6. A pressure vessel according to one of the preceding claims wherein an intermediate space is provided between the outer vessel (1) and the inner vessel (5, 6, 7, 8; 25, 26; 35, 36; 45, 46; 55, 56) at least in partial regions and the outer vessel (1) has at least one relief opening (37; 47; 57; 67) which communicates (30; 60) with the intermediate space.

7. A pressure vessel according to claim 6 wherein each relief opening (37; 47; 57; 67) is closed with a plug (38) which can be pressed outwardly in the event of an increased pressure in the intermediate space.

8. A pressure vessel according to one of the preceding claims wherein the casing portion (21; 31; 41; 51; 61) and/or the outer collar (24; 34; 44; 54; 64) are provided with steps (50) and/or grooves (30; 60) for simplifying assembly and/or for the relief of pressure in the event of the inner vessel (5, 6, 7, 8; 25, 26; 35, 36; 45, 46; 55, 56) leaking.

9. A process for fixing the support bottom (63) of a pressure vessel according to claim 3, comprising the following steps:
(a) the casing portion (61) and the outer collar (64) of the support bottom (63) are machined true to size on the inside and outside respectively;
(b) the support bottom (63) is fitted at the end into the casing portion (61) so that the outer collar (64) and the casing portion (61) are disposed approximately concentrically relative to each other, leaving a soldering gap (69) which can preferably contain a solder deposit (74);
(c) the collar (64) and the casing portion (61) are soldered together and more specifically only to such an extent that the solder does not reach the inner bottom (65);
(d) after heat acts only briefly on the pressure-bearing part of the casing portion (61) and the support bottom (63) the soldering operation is terminated so that no changes in structure occur in the pressure-bearing parts.

10. A process according to claim 9 wherein the solder (71) is contained in an annular container (70) which is heated by induction coils (72, 73).

## Revendications

1. Réservoir sous pression à double paroi comportant un réservoir intérieur à paroi mince (5, 6, 7, 8 ; 25, 26 ; 35, 36 ; 45, 46 ; 55, 56) fabriqué dans un matériau étanche, résistant à la corrosion, en particulier en acier allié, et un réservoir extérieur (1) résistant à la pression, qui présente une enveloppe (11 ; 21 ; 31 ; 41 ; 51 ; 61), une partie de transition (12), une partie formant col (13) et une partie formant fond (2 ; 22 ; 32 ; 42 ; 52), la partie formant fond (2 ; 22 ; 32 ; 42 ; 52), et/ou la partie de transition (12) avec la partie (13) formant col, étant disposée intérieurement dans une région d'extrémité, cylindrique ou légèrement conique, de l'enveloppe (11 ; 21 ; 31 ; 41 ; 51 ; 61) et la partie formant fond (2 ; 22 ; 32 ; 42 ; 52) ou la partie de transition (12) présentant un rebord extérieur (4; 24 ; 34 ; 44; 54 ; 64) qui, au moins par portions, s'étend de manière sensiblement parallèle à la région d'extrémité de l'enveloppe (11 ; 21 ; 31 ; 41 ; 51 ; 61) et est assemblé à ladite région par un assemblage jointif (9 ; 29 ; 39 ; 49 ; 59 ; 69), caractérisé en ce que la partie formant fond (2 ; 22 ; 32 ; 42 ; 52) est formée de manière telle qu'il ne se crée sous l'effet de la pression intérieure aucune contrainte tangentielle intérieure dans la zone d'assemblage jointif, et la partie formant fond étant bombée vers l'extérieur, au moins à proximité de la zone d'assemblage.

2. Réservoir sous pression selon la revendication 1, dans lequel l'assemblage jointif est un assemblage par soudage (9 ; 29 ; 39 ; 49 ; 59) ou brasage fort (69) et la zone d'assemblage est située à une distance (a) du fond intérieur (5 ; 25 ; 35 ; 45 ; 55 ; 65) qui est nettement supérieure à l'épaisseur (d) de paroi de l'enveloppe (1), de préférence supérieure au double de l'épaisseur (d) de la paroi.

3. Réservoir sous pression selon la revendication 1 ou 2, dans lequel le réservoir extérieur (1) est fabriqué en acier hautement trempé, par exemple en 34CrMo4, et dans lequel l'assemblage jointif est un assemblage par brasage fort (69), obtenu au moyen d'un métal d'apport (71) qui peut être utilisé à une température de brasage inférieure à la température critique pour des modifications de la structure de l'acier hautement trempé, par exemple à 730 °C.

4. Réservoir sous pression selon la revendication 1 ou 2, dans lequel l'assemblage jointif (9 ; 29 ; 39 ; 49 ; 59) est réalisé par un procédé radiatif, en particulier par soudage par rayonnement électronique.

5. Réservoir sous pression selon l'une quelconque des revendications précédentes, dans lequel la partie formant fond (2 ; 22 ; 32 ; 42 ; 52) est constituée par un fond de support (3 ; 23 ; 33 ; 43 ; 53 ; 63) bombé vers l'extérieur et par un rebord extérieur (4 ; 24 ; 34 ; 44 ; 54 ; 64) cylindrique ou légèrement conique dont la forme extérieure correspond à la forme intérieure de 1'enveloppe (11 ; 21 ; 31 ; 41 ; 51 ; 61).

6. Réservoir sous pression selon l'une quelconque des revendications précédentes, dans lequel un interstice est présent, au moins dans des régions partielles, entre le réservoir extérieur (1) et le réservoir intérieur (5, 6, 7, 8, 25, 26 ; 35, 36 ; 45, 46 ; 55, 56) et dans lequel le réservoir extérieur (1) présente au moins une ouverture d'évacuation (37 ; 47 ; 57 ; 67) qui communique (30 ; 60) avec l'interstice.

7. Réservoir sous pression selon la revendication 6, dans lequel chaque ouverture d'évacuation (37 ; 47 ; 57 ; 67) est obturée par un bouchon (38) qui peut être poussé vers l'extérieur lors d'une surpression dans l'interstice.

8. Réservoir sous pression selon l'une quelconque des revendications précédentes, dans lequel l'enveloppe (21 ; 31 ; 41 ; 51 ; 61), et/ou le rebord extérieur (24 ; 34 ; 44 ; 54 ; 64) sont pourvus de redents (50) et/ou de gorges (30 ; 60) destinés à simplifier le montage et/ou à évacuer la pression lorsque le réservoir intérieur (5, 6, 7, 8, 25, 26 ; 35, 36 ; 45, 46 ; 55, 56) n'est plus étanche.

9. Procédé de fixation du fond support (63) d'un réservoir sous pression selon la revendication 3, comprenant les étapes suivantes :
a. l'enveloppe (61) et le rebord extérieur (64) du fond support (63) sont usinés intérieurement ou extérieurement aux dimensions ;
b. le fond support (63) est introduit de manière frontale dans l'enveloppe (61) de façon que le rebord extérieur (64) et l'enveloppe (61) soient disposés de manière sensiblement concentrique l'un par rapport à l'autre, en conservant un intervalle de brasage (69) qui peut, de préférence, contenir un dépôt de métal d'apport (74) ;
c. le rebord extérieur (64) et l'enveloppe (61) sont brasés l'un à l'autre dans une mesure telle que le métal d'apport n'atteigne pas le fond intérieur (65) ;
d. l'opération de brasage est interrompue après un effet thermique suffisamment bref sur la partie de l'enveloppe (61) supportant la pression ainsi que sur le fond support (63) pour qu'aucune modification de structure ne s'opère dans les parties supportant la pression.

10. Procédé selon la revendication 9, dans lequel le métal d'apport (71) est contenu dans un réservoir (70) annulaire qui est chauffé par des bobines d'induction (72, 73).
